**Europäisches Patentamt**

**European Patent Office**

**Office européen des brevets**

(19)

(11) Numéro de publication: **0 272 958
B1**

# (12) FASCICULE DE BREVET EUROPEEN

(45) Date de publication du fascicule du brevet:
14.11.90

(51) Int. Cl.⁵: **B29C 67/14**

(21) Numéro de dépôt: **87402597.6**

(22) Date de dépôt: **18.11.87**

(54) **Procédé de fabrication de pièces composites à zones sandwich et monolithiques.**

(30) Priorité: **19.11.86 FR 8616086**

(43) Date de publication de la demande:
**29.06.88 Bulletin 88/26**

(45) Mention de la délivrance du brevet:
**14.11.90 Bulletin 90/46**

(84) Etats contractants désignés:
**DE ES GB IT NL**

(56) Documents cités:
**DE-A- 3 511 610
GB-A- 723 535
US-A- 3 775 238
US-A- 4 216 047
US-A- 4 622 091**

**COMPOSITES,
vol. 13, no. 4, octobre 1982, pages 401-405, Butterworth
& Co. Publishers Ltd, Guildford, Surrey, GB; A.K.
GREEN et al.: "Assessment of chopped strand mat
GRP lamination for the construction of damage
resistant ship hull structures"
Les matériaux composites", cahier no. 1, pages C 198 à
C 201, Editions de "L'Usine Nouvelle", par J. Weiss et
C. Bord**

(73) Titulaire: **AEROSPATIALE Société Nationale
Industrielle, 37, Boulevard de Montmorency,
F-75781 Paris Cédex 16(FR)**

(72) Inventeur: **Boime, Bernard, 22 rue du Tertre,
F-92150 Surèsnes(FR)**
Inventeur: **Lefèvre, Patrice, 19 Place Jeanne d'Arc,
F-75013 Paris(FR)**

(74) Mandataire: **Barnay, André François, Cabinet
Barnay 80 rue Saint-Lazare, F-75009 Paris(FR)**

## Description

La présente invention concerne la fabrication des structures composites sandwich utilisées notamment dans la construction aéronautique, spatiale ou autre, et du type comportant des zones sandwich ayant une âme en nid d'abeilles, ou en mousse de faible densité collée entre deux peaux stratifiées, et des zones monolithiques formées uniquement de stratifiés, la transition entre les deux zones étant formée par un biseau dans le bord de la zone sandwich.

L'invention est plus particulièrement relative à un procédé de fabrication de tels éléments à structure composite, et notamment de fabrication de pièces dont la structure assure le raidissement qui requièrent de hautes performances spécifiques en flexion avec des reprises d'efforts localisées.

La réalisation de telles structures présentant les hautes performances désirées relève d'une technique générale classique telle que décrit par exemple par J. WEISS et C. BORD dans la publication "Les matériaux composites" cahier n° 1, pages C 198 à C 201, Editions de "L'Usine Nouvelle"; dans cette technique, il est indispensable de respecter les impératifs suivants:

– parfaite stratification des zones monolithiques,

– formation correcte d'un ménisque de colle aux pieds des mailles du nid d'abeilles,

– bonne stratification des peaux recouvrant le nid d'abeilles.

La fabrication d'un bon stratifié et la réalisation d'un bon collage dépendent essentiellement des conditions de mise en oeuvre: outillage et conditions de polymérisation et de leur adéquation avec les semi-produits utilisés.

Par "semi-produit" on entend désigner un produit composé de feuilles de fibres imprégnées de résine et conservé à l'état non polymérisé.

Les zones monolithiques d'une pièce dont la structure assure le raidissement recoivent les organes de fixation avec les autres éléments de la construction à laquelle elle est fixée. Ces zones sont donc le siège de fortes concentrations de contraintes aux points d'application des efforts.

Dans ces zones, le stratifié doit donc être exempt de tous défauts: microbulles, porosités ou tous types de délaminages entre couches, qui sont autant d'initiations de criques, fissurations ou autres amorces de rupture.

On assure habituellement une bonne qualité du stratifié par une pression exercée perpendiculairement au plan des fibres, pendant l'opération de polymérisation de la résine. Si cette pression est insuffisante, la bonne qualité de la stratification n'est pas assurée.

Les zones sandwich de la pièce doivent être aussi légères que possible tout en présentant la résistance nécessaire au cisaillement et autres efforts et contraintes de flexion. Dans ce but on réalise des ménisques de colle à chaque pied de maille du nid d'abeilles.

Ces ménisques de colle peuvent être réalisés de deux manières: soit en interposant un film de colle entre le nid d'abeilles et chaque peau stratifiée, mais la présence des deux films de colle alourdit considérablement la pièce; soit en utilisant une résine d'imprégnation des peaux suffisamment fluide pour monter par capillarité sur chaque pied du nid d'abeilles. La structure est alors plus légère.

Dans ce cas, la constitution du sandwich est alors réalisée par l'opération dite de "co-cuisson", qui consiste à empiler l'ensemble des produits frais – c'est-à-dire non polymérisés – sur l'outillage, et à polymériser l'ensemble sous une pression réduite, c'est-à-dire inférieure à la pression de flambage des mailles du nid d'abeilles, à chaud.

Cette technique est peu coûteuse du fait qu'elle ne nécessite qu'un seul passage en température.

Combinaison des zones monolithiques et en sandwich: lorsqu'une pièce présente à la fois une (ou plusieurs) zone sandwich et des zones monolithiques, les impératifs décrits ci-dessus sont incompatibles avec une opération de moulage en "co-cuisson".

En effet, la pression nécessaire à la qualité des zones monolithiques est en général supérieure à celle que peuvent supporter les mailles du nid d'abeilles.

Il est donc nécessaire d'appliquer sur la zone monolithique une pression supérieure à celle appliquée sur la zone sandwich. Ceci est rendu possible par la faible viscosité de la résine d'imprégnation qui laisse alors toute liberté aux fibres de renfort de la zone monolithique d'être chassées et de se déplacer vers les zones de plus faible pression.

L'invention a pour but de résoudre ces problèmes en fournissant un procédé de fabrication de tels éléments qui permette d'optimiser la masse de la pièce, d'assurer une très bonne qualité dans toutes les zones de celle-ci, et de la polymériser en "co-cuisson", c'est-à-dire de façon peu coûteuse.

Elle a pour objet à cet effet un procédé de fabrication de pièces composites, dont la structure assure le raidissement, présentant des zones sandwich et des zones monolithiques, caractérisé en ce qu'on utilise simultanément des semi-produits pré-imprégnés par des résines de viscosités différentes, et en ce qu'on applique des pressions différentes entre la zone sandwich et la zone monolithique.

De façon plus précise, les couches de semi-produit destinées à constituer les peaux des zones sandwich et leurs extensions dans les zones monolithiques sont imprégnées d'une résine de faible viscosité, pour assurer une bonne mouillabilité des pieds de mailles du nid d'abeilles, et les couches de semi-produit servant de renfort dans les zones monolithiques sont imprégnées d'une résine de forte viscosité, de telle sorte que les fibres de ces renforts ne soient pas chassées sous l'action de la pression, on dispose un film de colle recouvrant les extensions desdits renforts qui s'étendent sous le nid d'abeilles, pour assurer un bon collage dans cette zone et, lors de la polymérisation, on applique une pression plus forte dans la zone des parties monolithiques que dans la zone sandwich.

On notera que par "viscosité" on entend désigner la viscosité minimale de la résine pendant le cycle de polymérisation.

La description qui va suivre, en regard des dessins annexés à titre d'exemple non limitatif, permettra de bien comprendre comment l'invention peut être mise en pratique.

La figure 1 est une vue partielle montrant un bord d'une pièce composite de la technique antérieure, dont la structure assure le raidissement, présentant une zone sandwich et une zone monolithique, imprégnée d'une seule résine à faible viscosité et faisant apparaitre les défauts produits dans cette pièce par l'application d'une pression plus forte dans la zone monolithique.

La figure 2 est une vue analogue à celle de la figure 1, montrant la mise en oeuvre du procédé suivant l'invention.

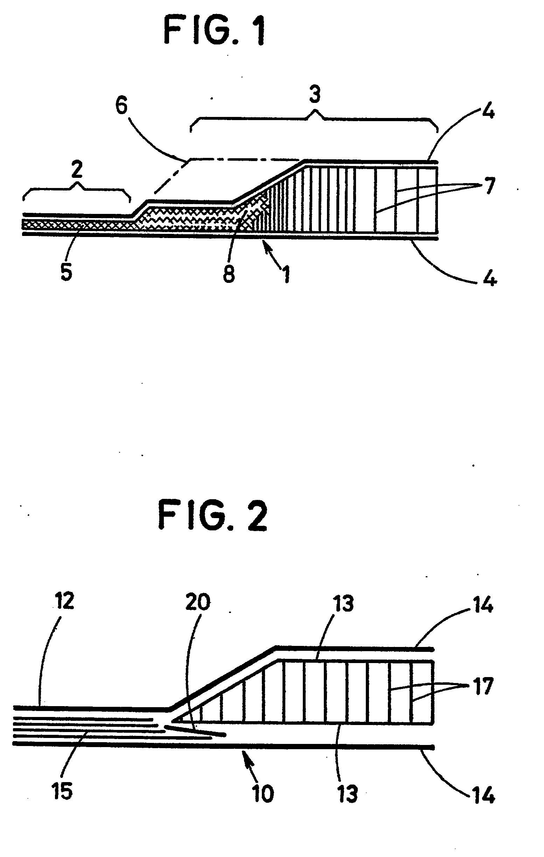

En se référant à la figure 1, une pièce composite 1 comprend une zone marginale monolithique 2 et une zone sandwich 3 en nid d'abeilles, recouvertes par deux peaux 4 pré-imprégnées d'une résine de faible viscosité.

Des couches de fibres 5, entre les peaux 4, renforcent la zone monolithique 2.

Un trait mixte 6 représente le profil désiré de la pièce finie. Les mailles du nid d'abeilles sont désignées par la référence 7.

Lorsqu'on applique sur la zone monolithique 2, une pression supérieure à celle appliquée sur la zone sandwich 3, les fibres 5 de renforcement de la zone monolithique 2 sont chassées et glissent vers la zone sandwich, comme représenté en 8 en écrasant les mailles du nid d'abeilles et altérant ainsi le profil désiré 6 de la pièce.

Dans la pièce 10 réalisée suivant l'invention, les peaux 14 sont imprégnées d'une résine à faible viscosité, comme dans l'exemple de la figure 1 mais, suivant le procédé de l'invention, les fibres 15 de la zone monolithique 12 sont imprégnées d'une résine de viscosité plus forte, et un film de colle 20 est disposé de façon à recouvrir les extensions des fibres 15 qui s'étendent sous le nid d'abeilles 17.

La viscosité plus forte de la résine imprégnant les fibres 15 dans la zone 12 empêche ces fibres de glisser sous le nid d'abeilles sous l'action de la pression appliquée sur cette zone, plus forte que celle appliquée sur la zone sandwich 13.

La pièce est polymérisée en co-cuisson, telle que définie plus haut, par exemple sous une vessie souple étanche appliquant sur l'ensemble une pression proche de la limite de résistance du nid d'abeilles à la pression (à l'affaissement), mais inférieure à celle-ci.

Simultanément une surpression est appliquée localement sur la vessie, au droit de la zone monolithique. La valeur de cette pression est réglable en fonction de la qualité désirée du stratifié.

Cette pression peut être exercée par tout moyen mécanique, pneumatique ou hydraulique approprié connu, ou encore par un moyen thermo-dilatable.

**Revendications**

1. Procédé de fabrication de pièces composites présentant des zones sandwich et des zones monolithiques, caractérisé en ce qu'on utilise simultanément des semi-produits (14, 15) pré-imprégnés par des résines de viscosités différentes, plus faible dans les couches de semi-produit destinées à constituer les peaux des zones sandwich (13) et leurs extensions dans les zones monolithiques (12) pour assurer une bonne mouillabilité des pieds de mailles (17) du nid d'abeilles, et plus forte dans les couches de semi-produit servant de renfort (15) dans les zones monolithiques (12) afin que les fibres de ces renforts ne soient pas chassées sous l'action de la pression, et en ce qu'on applique des pressions différentes entre la zone sandwich (13) et la zone monolithique (12).

2. Procédé suivant la revendication 1, caractérisé en ce qu'on dispose un film de colle (20) recouvrant les extensions desdits renforts (15) qui s'étendent sous le nid d'abeilles, pour assurer un bon collage dans cette zone et en ce que la pression appliquée lors de la polymérisation, est plus forte dans la zone (12) des parties monolithiques que dans la zone sandwich (13).

3. Procédé suivant la revendication 2, caractérisé en ce qu'on applique sur l'ensemble de la pièce une pression proche de la limite de résistance du sandwich (13) à la compression, mais inférieure à celle-ci, et en ce qu'on applique simultanément une surpression localisée à la zone monolithique (12).

4. Procédé suivant la revendication 3, caractérisé en ce que ladite surpression exercée localement sur la zone monolithique (12) est réglable.

5. Procédé suivant la revendication 4, caractérisé en ce que la polymérisation est effectuée suivant le procédé dit de "co-cuisson".

**Patentansprüche**

1. Verfahren zur Herstellung von Verbundgegenständen, wobei die Verbundgegenstände Zonen in Sandwichbauweise und Zonen in monolithischer Bauweise aufweist, dadurch gekennzeichnet, daß bei dem Verfahren Halbfertigprodukte (14, 15) verwendet werden, daß die Halbfertigprodukte (14, 15) mit Harz unterschiedlicher Viskosität vorimprägniert sind, daß die Viskosität des Harzes in den zur Bildung der Außenschicht der Zonen in Sandwichbauweise (13) vorgesehenen Lagen (14) und in den Ausdehnungen dieser Lagen (14) in die Zonen monolithischer Bauweise (12) gering ist, so daß durch die geringe Viskosität eine gute Benetzbarkeit der Berandungen der Maschen (17) der Wabenstruktur gewährleistet ist, daß ferner die Viskosität des Harzes in den zur Verstärkung der Zonen in monolithischer Bauweise (12) dienenden Lagen (15) der Halbfertigprodukte groß ist, so daß durch die große Viskosität gewährleistet ist, daß die Fasern dieser Verstärkung nicht unter dem angewandten Druck verschoben werden, und daß in der Zone in Sandwichbauweise (13) und in der Zone in monolithischer Bauweise (12) unterschiedliche Drücke angewandt werden.

2. Verfahren nach Anspruch 1, dadurch gekennzeichnet, daß ein Film aus Klebstoff (20) die sich bis unter die Wabenstruktur erstreckenden Ausdehnungen der zur Verstärkung dienenden Lagen (15) umhüllt, so daß eine gute Klebeverbindung in dieser Zone geschaffen wird, und daß der während der Polymerisation angewandte Druck in der Zone in monolithischer Bauweise (12) größer ist als in der Zone in Sandwichbauweise (13).

3. Verfahren nach Anspruch 2, dadurch gekennzeichnet, daß auf den gesamten Verbundgegenstand ein Druck ausgeübt wird, der nur wenig unterhalb der Grenze des Zusammendrückens der Zone in Sandwichbauweise (13) liegt, und daß gleichzeitig auf die Zone in monolithischer Bauweise (12) ein lokaler Überdruck aufgebracht wird.

4. Verfahren nach Anspruch 3, dadurch gekennzeichnet, daß der lokale Überdruck auf die Zone in monolithischer Bauweise (12) regelbar ist.

5. Verfahren nach Anspruch 4, dadurch gekennzeichnet, daß die Polymerisation entsprechend einem als "Zusammenkochen" bezeichneten Verfahren ("Co-cuisson"-Verfahren) durchgeführt wird.

## Claims

1. A process for producing composite components having sandwich zones and monolithic zones, characterised in that it simultaneously uses semifinished products (14, 15) pre-impregnated with resins of differing viscosities, lower viscosity in the layers of semifinished product intended to form the skins of the sandwich zones (13) and their extensions into the monolithic zones (12), in order to ensure good wettability of the bases of the honeycomb cells (17), and higher viscosity in the layers of semifinished product serving as a reinforcement (15) in the monolithic zones (12), in order that the fibres of these reinforcements are not expelled under the action of the pressure, and in that differing pressures are exerted between the sandwich zone (13) and the monolithic zone (12).

2. A process according to claim 1, characterised in that a film of adhesive (20) is arranged to cover the extensions of said reinforcements (15) which extend under the honeycomb, in order to ensure good adhesion in this zone, and in that the pressure applied during polymerisation is greater in the zone (12) of the monolithic portions than in the sandwich zone (13).

3. A process according to claim 2, characterised in that there is applied to the entire component a pressure close to the limit of resistance of the sandwich (13) to compression, but inferior thereto, and in that, simultaneously, a localised excess pressure is applied to the monolithic zone (12).

4. A process according to claim 3, characterised in that the said excess pressure, exerted locally to the monolithic zone (12), is adjustable.

5. A process according to claim 4, characterised in that polymerisation is effected according to the method known as "co-curing".

# FIG. 1

6
3
4
2
7
5
8
1
4

# FIG. 2

12
20
13
14
17
15
10
13
14